(19) Europäisches Patentamt
European Patent Office
Office européen des brevets

(11) **EP 2 755 732 B1**

(12) **EUROPÄISCHE PATENTSCHRIFT**

(45) Veröffentlichungstag und Bekanntmachung des Hinweises auf die Patenterteilung:
**13.01.2016  Patentblatt 2016/02**

(21) Anmeldenummer: **12741316.9**

(22) Anmeldetag: **26.07.2012**

(51) Int Cl.:
*B01D 3/14* (2006.01)     *B01D 61/36* (2006.01)
*C02F 1/44* (2006.01)

(86) Internationale Anmeldenummer:
**PCT/EP2012/064685**

(87) Internationale Veröffentlichungsnummer:
**WO 2013/037554 (21.03.2013 Gazette 2013/12)**

(54) **REKTIFIKATIONSANLAGE**

DISTILLATION STATION

INSTALLATION DE RECTIFICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2011  DE 102011113314**

(43) Veröffentlichungstag der Anmeldung:
**23.07.2014  Patentblatt 2014/30**

(73) Patentinhaber: **AAA Water Technologies AG**
**6330 Cham (CH)**

(72) Erfinder: **HEINZL, Wolfgang**
**83561 Ramerberg (DE)**

(74) Vertreter: **Manitz, Finsterwald & Partner GbR**
**Martin-Greif-Strasse 1**
**80336 München (DE)**

(56) Entgegenhaltungen:
**EP-A1- 1 925 355      DE-A1-102004 013 647**
**DE-A1-102004 030 529   DE-A1-102005 053 874**
**DE-A1-102009 020 179   JP-B2- 3 683 054**
**US-A1- 2004 211 725    US-A1- 2006 213 757**

**Beschreibung**

Die Erfindung betrifft eine Rektifikationsanlage zur Trennung von Komponenten eines Flüssigkeitsgemisches, mit einer vertikalen, durch Einbauten in einzelne Trennstufen unterteilten Rektifizierkolonne, die durch den Flüssigkeitsgemischzulauf zudem in eine Abtriebssäule und eine Verstärkungssäule geteilt wird, wobei in der Abtriebssäule das Leichtersiedende vom aus einem einen Verdampfer umfassenden Kolonnensumpf aufsteigenden Dampf aus dem Flüssigkeitsgemisch abgetrieben und in der Verstärkungssäule der Dampf mit Leichtersiedendem angereichert wird, das einer Rücklaufflüssigkeit entzogen wird, die dadurch erzeugt wird, dass am Kolonnenkopf abgezogener Dampf zumindest teilweise in einem Kondensator niedergeschlagen und in die Rektifizierkolonne zurückgeführt wird, und die Rücklaufflüssigkeit sowie das vorzugsweise zwischen zwei Trennstufen zugeführte Flüssigkeitsgemisch in den vertikal aufeinanderfolgenden, miteinander verbundenen Einbauten geführt sind.

Rektifikation ist die Anreicherung des Leichtersiedenden in einer Flüssigkeit durch einen Gegenstrom von Dampf und Kondensat in einer vertikalen Rektifizierkolonne. Im Prinzip beruht die Rektifikation in einer Rektifizierkolonne zwischen dem Verdampfer und dem Kondensator,, darauf, dass der aus dem Verdampfer aufsteigende Dampf der aus dem Kondensator herabrieselnden Flüssigkeit entgegenströmt. Zwischen Dampf und Flüssigkeit herrscht Wärme- und Stoffaustausch. Dabei kondensiert das Schwcrersiedende aus dem Dampf und wandert in die Flüssigkeit. Das Leichtersiedende verdampft durch die frei werdende Kondensationswärme aus der Flüssigkeit und wandert in den Dampf. Der Dampf reichert sich mit Leichtersiedendem an, wobei seine Temperatur in Strömungsrichtung stetig abnimmt. Die Flüssigkeit reichert sich mit Schwerersiedendem an, wobei ihre Temperatur in Strömungsrichtung stetig zunimmt.

Mit den in der Rektifizierkolonne vorgesehenen Einbauten, durch die die Phasengrenzfläche und Kontaktzeit der beiden Phasen vergrößert werden soll, wird der Wärme- und Stoffaustausch intensiviert. Durch diese Einbauten wird die Rektifizierkolonne in einzelne Trennstufen unterteilt.

Durch den Flüssigkeitsgemischzulauf wird die Rektifizierkolonne zudem in eine Abtriebsäule und eine Verstärkungssäule geteilt. Dabei wird in der Abtriebsäule das Leichtersiedende vom aus einem den Verdampfer umfassenden Kolonnensumpf aufsteigenden Dampf aus dem Flüssigkeitsgemisch abgetrieben, während in der Verstärkungssäule der Dampf mit Leichtersiedendem angereichert wird, das der Rücklaufflüssigkeit entzogen wird. Diese Rücklaufflüssigkeit wird vorzugsweise dadurch erzeugt, dass am Kolonnenkopf abgezogener Dampf zumindest teilweise in dem Kondensator niedergeschlagen und in die Rektifizierkolonne zurückgeführt wird. Die Rücklaufflüssigkeit sowie das vorzugsweise zwischen zwei Trennstufen zugeführte Flüssigkeitsgemisch sind in den vertikal aufeinanderfolgenden, miteinander verbundenen Einbauten geführt.

In der Rektifizierkolonne können unterschiedliche Dampfdrücke aufweisende Komponenten eines Flüssigkeitsgemisches getrennt werden, wobei stets nur eine Trennung von zwei Flüssigkeitskomponenten möglich ist. In der Rektifizierkolonne wird das Leichtersiedende im Gemischdampf und das Schwerersiedende in der Flüssigkeit durch einen Gegenstrom von Flüssigkeit und Dampf angereichert. Da der erhitzte Dampf aufsteigt, ist die Rektifizierkolonne in vertikaler Bauform ausgeführt.

Eine herkömmliche Rektifikationsanlage zur Trennung von Komponenten eines Flüssigkeitsgemisches ist aus dem Dokument US 2004 / 0 211 725 A1 bekannt. Die Dokumente US 2006 / 0 213 757 A1 und DE 10 2005 053 874 A1 beschreiben Vorrichtungen und Verfahren zur Membrandestillation.

Ziel aller Bauformen ist es, Flüssigkeit und Dampf möglichst großflächig und gleichmäßig über die Kolonnenhöhe in Kontakt zu bringen, um insbesondere den Stoffaustausch zu erhöhen und die Trennwirkung sowie das Verstärkungsverhältnis zu erhöhen.

Bei den bisher üblichen Rektifikationsanlagen werden Bodenkolonnen eingesetzt, deren Einbauten in Form von Glockenböden, Tunnelböden, Ventilböden und Siebböden vorgesehen sind. Maßgeblich für die Bewertung der Einbauten sind insbesondere die Trennwirkung, der Druckverlust, die Bauhöhe sowie die Anlagekosten.

Der Erfindung liegt im Wesentlichen die Aufgabe zugrunde, eine verbesserte Rektifikationsanlage der eingangs genannten Art zu schaffen, die zumindest teilweise modular ausgeführt ist und mit der in der Rektifizierkolonne insbesondere bei möglichst geringem Druckverlust eine gleichmäßigere Flüssigkeitsverteilung, größere Phasengrenzflächen und längere Kontaktzeiten der beiden Phasen erreicht werden.

Erfindungsgemäß wird diese Aufgabe dadurch gelöst, dass die Einbauten jeweils wenigstens einen Flüssigkeitskanal umfassen, der zumindest teilweise durch eine beidseitig dampfdurchlässige, flüssigkeitsdichte Membranwand vom Dampfraum der Rektifizierkolonne getrennt ist.

Aufgrund dieser Ausbildung ist ein zumindest teilweise modularer Aufbau der Rektifikationsanlage möglich. Zudem werden durch die erfindungsgemäßen Einbauten in der Rektifizierkolonne insbesondere eine gleichmäßigere Flüssigkeitsverteilung, größere Phasengrenzflächen und längere Kontaktzeiten der beiden Phasen erreicht.

Die Einbauten sind so miteinander verbunden, dass deren Flüssigkeitskanäle jeweils vollständig mit Flüssigkeit gefüllt sind.

Dies könnte nun zwar beispielsweise dadurch erreicht werden, dass der Flüssigkeitsabfluss angedrosselt und eine Wassersäule aufgebaut wird. Die Wassersäule würde allerdings dazu führen, dass die Membran im unteren, heißeren Bereich der Rektifizierkolonne infolge des höheren statischen Drucks einer höheren Druck- und Temperaturbelastung ausgesetzt wäre als im oberen, kälteren Bereich der Rektifizierkolonne.

Insbesondere zur Reduzierung dieser Druckbelastung sind erfindungsgemäß vertikal benachbarte Einbauten jeweils über einen Rücklaufkanal miteinander verbunden, der zwischen einem in einem unteren Bereich eines Flüssigkeitskanals des in Strömungsrichtung der Flüssigkeit betrachtet vorangehenden Einbaus vorgesehenen Flüssigkeitsauslass und einem in einem oberen Bereich eines Flüssigkeitskanals des darauffolgenden Einbaus vorgesehenen Flüssigkeitseinlass angeordnet und ausgehend vom Flüssigkeitsauslass des vorangehenden Einbaus zunächst zumindest bis zum obersten möglichen Flüssigkeitsniveau in diesem Einbau nach oben geführt ist.

Durch das Nachobenführen des Rücklaufkanals am Flüssigkeitsauslass des vorangehenden Einbaus zumindest bis zum obersten möglichen Flüssigkeitsniveau ist sichergestellt, dass der oder die flüssigkeitsführenden Flüssigkeitskanäle eines jeweiligen Einbaus jeweils vollständig mit Flüssigkeit gefüllt sind.

Dabei ist der Rücklaufkanal nach Art eines U-Rohres ausgeführt. Hierbei umfasst der obere Bereich des Ablaufteils des nach Art eines U-Rohres ausgeführten Rücklaufkanals erfindungsgemäß einen Kanalabschnitt, der zumindest teilweise von einer weiteren vorzugsweise wieder beidseitig dampfdurchlässigen, flüssigkeitsdichten Membranwand begrenzt ist, die einerseits mit der Flüssigkeit und andererseits mit dem Dampfraum der Rektifizierkolonne in Kontakt kommt. Damit ist sichergestellt, dass bei frei ablaufender Flüssigkeit unter Vermeidung eines Flüssigkeitsrückstaus über die Kolonnenhöhe an einem jeweiligen Kolonneneinbau stets nur maximal die Höhe der Flüssigkeitssäule eines Kolonneneinbaus die jeweilige Membranwand belastet. Dabei ergibt sich aus der hydrostatischen Grundgleichung unter der Annahme der Inkompressibilität der Flüssigkeit ($\varrho$ = const.) für den von der Höhe y abhängigen Druck p (y) die Beziehung:

$$p(h) = \varrho \cdot g \cdot h \ + p(0),$$

mit

$\varrho$ = Dichte der Flüssigkeit,
g = Schwerebeschleunigung,
h = Ausdehnung der Flüssigkeitssäule in y-Richtung,
p(y=0) = Druck an der Oberfläche der Flüssigkeitssäule.

Bevorzugt ist der Absolutdruck im Dampfraum der Rektifizierkolonne zur Erhöhung des Dampfdurchtritts durch die Membranwände der Flüssigkeitskanäle der Einbauten entsprechend abgesenkt. Damit wird der Anteil an Inertgasen in den jeweils zumindest teilweise durch eine beidseitig dampfdurchlässige, flüssigkeitsdichte bzw. mikroporöse, hydrophobe Membranwand begrenzten Einbauten reduziert, wodurch der Dampfdurchtritt in beiden Richtungen beschleunigt wird. Wie bereits erwähnt ist eine jeweilige Membranwand für den Dampfdurchtritt in beide Richtungen offen.

Vorteilhafterweise umfasst wenigstens ein Einbau zumindest einen sich vorzugsweise allgemein vertikal erstreckenden Flüssigkeitskanal mit wenigstens einer Flachmembran. Grundsätzlich können alle Flüssigkeitskanäle der Einbauten jeweils wenigstens eine solche Flachmembran umfassen.

Es sind jedoch auch solche Ausführungen denkbar, bei denen wenigstens ein Einbau zumindest einen Flüssigkeitskanal mit einer Spiralwickelkonfiguration aufweist, die auf wenigstens zwei einander gegenüberliegenden Seiten durch die dampfdurchlässige, flüssigkeitsdichte Membranwand begrenzt ist. Grundsätzlich können sämtliche Einbauten der Rektifizierkolonne jeweils eine solche Spiralmembranwickelkonfiguration umfassen.

Gemäß einer weiteren vorteilhaften Ausführungsform der erfindungsgemäßen Rektifikationsanlage kann wenigstens ein Einbau auch zumindest einen sich vorzugsweise allgemein vertikal erstreckenden Flüssigkeitskanal in Form eines Membranhohlfadens umfassen. Grundsätzlich können sämtliche Einbauten der Rektifizierkolonne jeweils einen oder mehrere solche Flüssigkeitskanäle in Form von Membranhohlfäden umfassen.

Bevorzugt umfasst wenigstens ein Einbau mehrere parallel geschaltete, sich vorzugsweise jeweils allgemein vertikal erstreckende Flüssigkeitskanäle. Dabei können die parallel geschalteten Flüssigkeitskanäle insbesondere horizontal nebeneinander angeordnet sein. Grundsätzliche können sämtliche Einbauten der Rektifizierkolonne jeweils solche parallel geschalteten, insbesondere horizontal nebeneinander angeordnete Flüssigkeitskanäle umfassen.

Dabei ist bevorzugt wenigstens ein Einbau vorgesehen, der mehrere parallel geschaltete, horizontal nebeneinander angeordnete Flüssigkeitskanäle umfasst, die jeweils auf wenigstens zwei einander gegenüberliegenden Seiten durch eine Flachmembran vom Dampfraum der Rektifizierkolonne getrennt sind. Hierbei weist ein jeweiliges Paar von horizontal benachbarten Flüssigkeitskanälen vorzugsweise einander zugewandte Flachmembranen auf, die seitlich einen Dampfkanal begrenzen, durch den aus dem Kolonnensumpf in den Dampfraum der Rektifizierkolonne aufsteigender Dampf hindurchströmt.

Gemäß einer beispielhaften zweckmäßigen Ausführungsform der erfindungsgemäßen Rektifikationsanlage ist wenigstens ein Einbau vorgesehen, der mehrere parallel geschaltete, horizontal nebeneinander angeordnete Flüssigkeitskanäle in Form von Membranhohlfäden umfasst, deren dampfdurchlässige, flüssigkeitsdichte Membranwand jeweils mit aus dem Kolonnensumpf in den Dampfraum der Rektifizierkolonne aufsteigendem Dampf in Kontakt kommt.

Dabei können mehrere parallel geschaltete, horizontal in einer x-Richtung und einer dazu senkrechten y-Richtung verteilte Membranhohlfäden vorgesehen sein, denen die Flüssigkeit über in deren oberem Bereich vorgesehene x- und y-Richtungsverteiler zugeführt und aus denen die Flüssigkeit über in deren unterem Bereich vorgesehene x- und y-Richtungssammler abgeführt wird.

Die dampfdurchlässigen, flüssigkeitsdichten Membranwände können also beispielsweise Flachmembranen, Spiralmembranwickelkonfigurationen oder Hohlfäden umfassen, wobei die Membranen für den Dampfdurchtritt vorteilhafterweise keine Vorzugsrichtung aufweisen. Sie sind sowohl für den vom Dampfraum durch die Membran in die Flüssigkeit hineinströmenden, kondensierenden Dampf, der mehr Schwersieder enthält, als auch für den aus der Flüssigkeit heraus entstehenden Dampf offen, der mehr Leichtsieder enthält. Wie ausgeführt, sind beispielsweise auch Spiralmembranwickelkonfigurationen denkbar, die jeweils auf wenigstens zwei einander gegenüberliegenden Seiten durch eine dampfdurchlässige, flüssigkeitsdichte Membranwand begrenzt sind. In der Rektifizierkolonne 16 können die Einbauten 14 jeweils von der gleichen Art sein. Es ist jedoch auch möglich, dass die Rektifizierkolonne 16 zumindest teilweise Einbauten 14 unterschiedlicher Art umfasst.

Mit den Membranen, insbesondere der Flachmembranen, können die Einbauten der Rektifizierkolonne zumindest teilweise auf einfache modulare Weise aufgebaut werden.

Um zumindest teilweise auch einen modularen Aufbau des dem Kolonnensumpf zugeordneten Verdampfers zu ermöglichen, umfasst der Verdampfer gemäß einer bevorzugten Ausführungsform der erfindungsgemäßen Rektifikationsanlage wenigstens eine Verdampfungseinheit mit einem von einem Heizmittel durchströmten, zumindest teilweise von einer wärmeleitenden, dampf- und flüssigkeitsdichten Wand begrenzten Heizmittelkanal und wenigstens einem an die wärmeleitende Wand angrenzenden, von Flüssigkeit aus der Rektifizierkolonne beaufschlagten Flüssigkeitskanal, der auf seiner der der wärmeleitenden Wand gegenüberliegenden Seite durch eine dampfdurchlässige, flüssigkeitsdichte Membranwand vom Dampfraum des Kolonnensumpfes getrennt und dem das Sumpfprodukt entnehmbar ist.

Dabei ist vorteilhafterweise wenigstens eine Verdampfungseinheit vorgesehen, die auf wenigstens zwei einander gegenüberliegenden Seiten des Heizmittelkanals jeweils einen von diesem durch eine wärmeleitende, dampf- und flüssigkeitsdichte Wand getrennten, von Flüssigkeit aus der Rektifizierkolonne bzw. deren Einbauten beaufschlagten Flüssigkeitskanal umfasst, der auf seiner der wärmeleitenden Wand gegenüberliegenden Seite durch eine dampfdurchlässige, flüssigkeitsdichte Membranwand vom Dampfraum des Kolonnensumpfes getrennt ist.

Der Verdampfer kann insbesondere mehrere bezüglich der zugeführten Flüssigkeit aus der Rektifizierkolonne parallel geschaltete Verdampfungseinheiten umfassen.

Dabei sind die sich vorzugsweise jeweils allgemein vertikal erstreckenden Verdampfungseinheiten vorteilhafterweise horizontal nebeneinander angeordnet. Ein jeweiliges Paar von horizontal benachbarten Verdampfungseinheiten kann beispielsweise einander zugewandte Flachmembranen aufweisen, durch die angrenzende Flüssigkeitskanäle dieser benachbarten Verdampfungseinheiten vom Dampfraum des Kolonnensumpfes getrennt sind.

Die erfindungsgemäße Rektifikationsanlage kann zumindest teilweise als modulares Strömungssystem mit einer Vielzahl von Rahmenelementen aufgebaut werden, wobei verschiedene Funktionseinheiten wie insbesondere ein jeweiliger Flüssigkeitskanal der Einbauten der Rektifizierkolonne sowie ein jeweiliger Heizkanal und ein jeweiliger Flüssigkeitskanal der Verdampfungseinheiten des dem Kolonnensumpf zugeordneten Verdampfers jeweils in Form eines solchen Rahmenelements vorgesehen sein können. Die Rahmenelemente können mit Stegstrukturen versehen sein, über die sie beispielsweise zur Bildung eines mehrere parallel geschaltete Flüssigkeitskanäle umfassenden Kolonneneinbaus oder der Verdampfungseinheiten miteinander verbindbar sind. Die Rahmenelemente können zumindest teilweise einen von einem äußeren Rahmen umschlossenen Innenbereich umfassen, der vorzugsweise mit einem insbesondere gitterartigen Abstandshalter versehen sein kann, der auf wenigstens einer Seite zur Bildung eines jeweiligen Kanals insbesondere jeweils mit einer Funktionsfläche versehen sein kann, die vorteilhafterweise jeweils durch eine Folie oder eine Membran, insbesondere Flachmembran, gebildet ist.

Die Erfindung wird im Folgenden anhand von Ausführungsbeispielen unter Bezugnahme auf die Zeichnung näher erläutert; in dieser zeigen:

Fig. 1    eine schematische Darstellung einer beispielhaften Ausführungsform einer Rektifikationsanlage,

Fig. 2    eine schematische Darstellung eines beispielhaften Einbaus der Rektifizierkolonne mit einem nach Art eines U-Rohres ausgeführten Rücklaufkanal,

Fig. 3    eine schematische Darstellung eines beispielhaften Einbaus der Rektifizierkolonne mit mehreren parallel geschalteten, sich vorzugsweise jeweils allgemein vertikal erstreckenden Flüssigkeitskanälen,

Fig. 4    eine schematische Darstellung eines beispielhaften Einbaus der Rektifizierkolonne, die zumindest einen Flüssigkeitskanal mit einer Spiralmembranwickelkonfiguration umfasst,

Fig. 5 eine schematische Darstellung eines beispielhaften Einbaus der Rektifizierkolonne mit mehreren parallel geschalteten, sich vorzugsweise jeweils allgemein vertikal erstreckenden Flüssigkeitskanälen in Form von Membranhohlfäden und

Fig. 6 eine schematische Darstellung einer beispielhaften Ausführungsform des dem Kolonnensumpf zugeordneten Verdampfers.

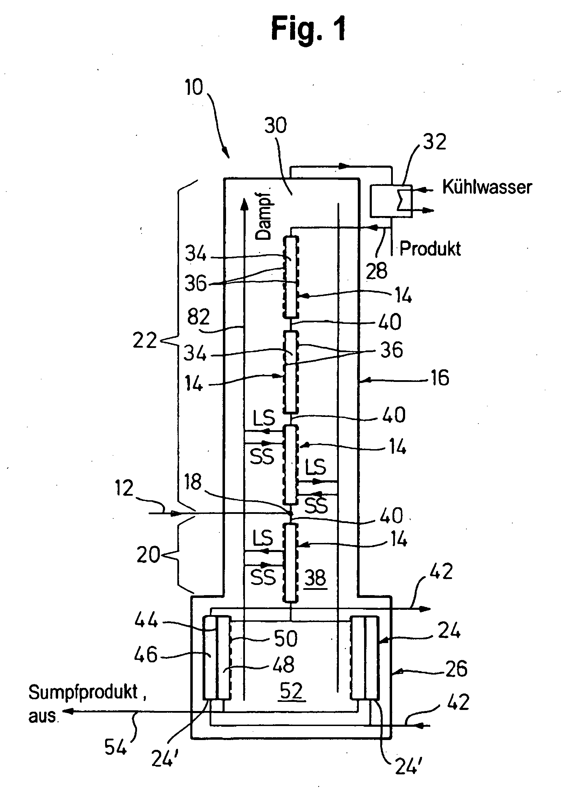

Fig. 1 zeigt in schematischer Darstellung eine beispielhafte Ausführungsform einer Rektifikationsanlage 10 zur Trennung von Komponenten eines Flüssigkeitsgemisches 12.

Die Rektifikationsanlage 10 umfasst eine vertikale, durch Einbauten 14 in einzelne Trennstufen unterteilte Rektifizierkolonne 16, die durch den Flüssigkeitsgemischzulauf 18 zudem in eine Abtriebsäule 20 und eine Verstärkungssäule 22 geteilt wird.

Dabei wird in der Abtriebsäule 20 das Leichtersiedende LS vom aus einem einen Verdampfer 24 umfassenden Kolonnensumpf 26 aufsteigenden Dampf aus dem Flüssigkeitsgemisch 12 abgetrieben, während in der Verstärkungssäule 22 der Dampf mit Leichtersiedendem angereichert wird, das einer Rücklaufflüssigkeit 28 entzogen wird, die dadurch erzeugt wird, dass am Kolonnenkopf 30 abgezogener Dampf zumindest teilweise in einem Kondensator 32 niedergeschlagen und in die Rektifizierkolonne 16 zurückgeführt wird.

Die Rücklaufflüssigkeit 28 sowie das vorzugsweise zwischen zwei Trennstufen zugeführte Flüssigkeitsgemisch 12 sind in den vertikal aufeinanderfolgenden, miteinander verbundenen Einbauten 14 geführt.

Die Einbauten 14 umfassen jeweils wenigstens einen Flüssigkeitskanal 34, der zumindest teilweise durch eine beidseitig dampfdurchlässige, flüssigkeitsdichte Membranwand 36 vom Dampfraum 38 der Rektifizierkolonne 16 getrennt ist.

Wie in der Fig. 1 durch die Pfeile LS und SS nochmals veranschaulicht, kondensiert das Schwerersiedende SS aus dem Dampf und wandert in die Flüssigkeit, während das Leichtersiedende LS durch die frei werdende Kondensationswärme aus der Flüssigkeit verdampft und in den Dampf wandert.

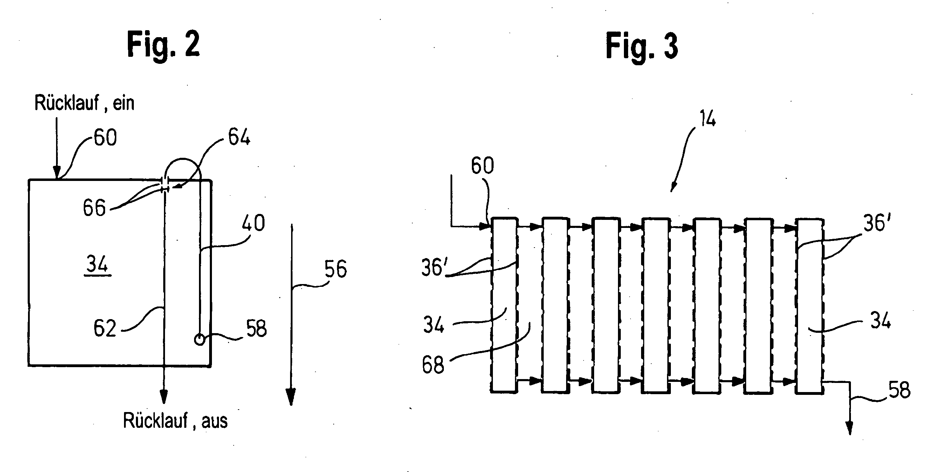

Die Einbauten 14 sind zweckmäßigerweise so miteinander verbunden, dass deren Flüssigkeitskanäle 34 jeweils vollständig mit Flüssigkeit gefüllt sind. Dabei können vertikal benachbarte Einbauten 14 jeweils über einen Rücklaufkanal 40 so miteinander verbunden sein, wie dies weiter unten anhand der Fig. 2 näher erläutert wird.

Der absolute Druck im Dampfraum 38 der Rektifizierkolonne 16 ist zur Erhöhung des Dampfdurchtritts durch die Membranwände 36 der Flüssigkeitskanäle 34 der Einbauten 14 zweckmäßigerweise abgesenkt.

Vorteilhafterweise kann wenigstens ein Einbau 14 zumindest einen sich vorzugsweise allgemein vertikal erstreckenden Flüssigkeitskanal 34 mit wenigstens einer Flachmembran 36' umfassen. Bei der beispielhaften Ausführungsform gemäß Fig. 1 umfassen sämtliche Einbauten 14 der Rektifizierkolonne 16 jeweils wenigstens einen solchen Flüssigkeitskanal 34 mit wenigstens einer Flachmembran 36'.

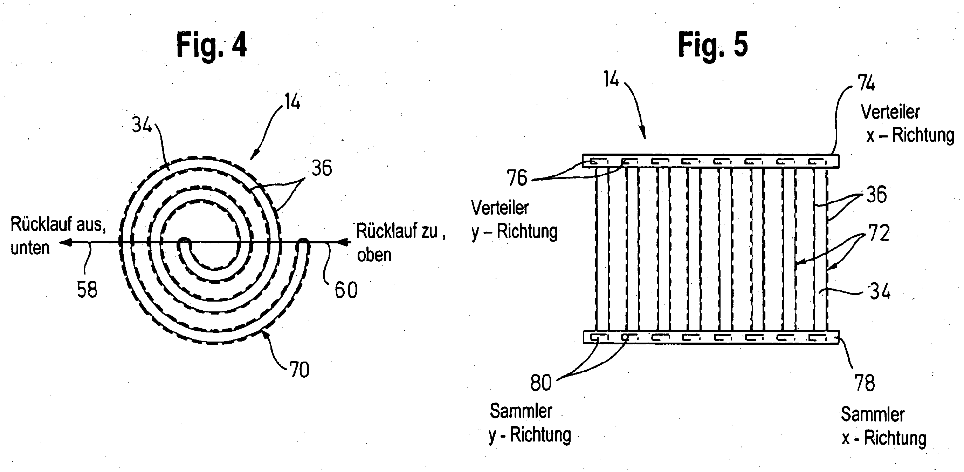

Wie weiter unten anhand der Fig. 4 und 5 beschrieben, kann auch wenigstens ein Einbau 14 mit zumindest einem Flüssigkeitskanal 34 mit einer Spiralwickelkonfiguration 70 oder zumindest einem Flüssigkeitskanal 34 in Form eines Membranhohlfadens 72 vorgesehen sein.

Wie der Fig. 1 überdies entnommen werden kann, kann der dem Kolonnensumpf 26 zugeordnete Verdampfer 24 wenigstens eine Verdampfungseinheit 24' mit einem von einem Heizmittel 42 durchströmten, zumindest teilweise von einer wärmeleitenden, dampf- und flüssigkeitsdichten Wand 44 begrenzten Heizmittelkanal 46 und wenigstens einem an die wärmeleitende Wand 44 angrenzenden, von Flüssigkeit aus der Rektifizierkolonne 16 bzw. deren Einbauten 14 beaufschlagten Flüssigkeitskanal 48 umfassen, der auf seiner der wärmeleitenden Wand 44 gegenüberliegenden Seite durch eine dampfdurchlässige, flüssigkeitsdichte Membranwand 50 vom Dampfraum 52 des Kolonnensumpfes 26 getrennt und dem das Sumpfprodukt 54 entnehmbar ist. Umfasst der Verdampfer 24 mehrere Verdampfungseinheiten 24', so können deren Heizmittelkanäle 46 vorzugsweise über einen gemeinsamen Heizmittelkreislauf versorgt werden.

Wie bereits erwähnt, sind die Einbauten 14 der Rektifizierkolonne 16 vorteilhafterweise so miteinander verbunden, dass deren Flüssigkeitskanäle 34 jeweils vollständig mit Flüssigkeit gefüllt sind. Dabei können vertikal benachbarte Einbauten 14 jeweils über einen Rücklaufkanal 40 (vgl. auch Fig. 2) miteinander verbunden sein, der zwischen einem in einem unteren Bereich eines Flüssigkeitskanals 34 des in Strömungsrichtung 56 der Flüssigkeit betrachtet vorangehenden Einbaus vorgesehenen Flüssigkeitsauslass 58 und einem in einem oberen Bereich eines Flüssigkeitskanals des darauffolgenden Einbaus vorgesehenen Flüssigkeitseinlass 60 angeordnet und ausgehend vom Flüssigkeitsauslass 58 des vorangehenden Einbaus zunächst zumindest bis zum obersten möglichsten Flüssigkeitsniveau in diesem Einbau nach oben geführt ist.

Wie anhand der Fig. 2 zu erkennen ist, kann der Rücklaufkanal 40 nach Art eines U-Rohres ausgeführt sein. Dabei kann der obere Bereich des Ablaufteils 62 eines solchen nach Art eines U-Rohres ausgeführten Rücklaufkanals 40 einen Kanalabschnitt 64 umfassen, der zumindest teilweise von einer weiteren vorzugsweise wieder beidseitig dampfdurchlässigen, flüssigkeitsdichten Membranwand 66 begrenzt ist, die einerseits mit der Flüssigkeit und andererseits mit dem Dampfraum 38 der Rektifizierkolonne 16 (vgl. Fig. 1) in Kontakt kommt.

Fig. 3 zeigt in schematischer Darstellung einen beispielhaften Einbau 14 der Rektifizierkolonne 16 mit mehreren parallel geschalteten, sich vorzugsweise jeweils allgemein vertikal erstreckenden Flüssigkeitskanälen 34. Dabei können die parallel geschalteten Flüssigkeitskanäle 34 insbesondere horizontal nebeneinander angeordnet sein.

Dabei kann insbesondere wenigstens ein Einbau 14 vorgesehen sein, der mehrere parallel geschaltete, horizontal nebeneinander angeordnete Flüssigkeitskanäle 34 umfasst, die jeweils auf wenigstens zwei einander gegenüberliegenden Seiten durch eine Flachmembran 36' vom Dampfraum 38 der Rektifizierkolonne 16 (vgl. auch Fig. 1) getrennt sind, wobei ein jeweiliges Paar von horizontal benachbarten Flüssigkeitskanälen 34 vorzugsweise einander zugewandte Flachmembranen 36' aufweist, die seitlich einen Dampfkanal 68 begrenzen, durch den aus dem Kolonnensumpf 26 in den Dampfraum 38 der Rektifizierkolonne 16 aufsteigender Dampf hindurchströmt.

Wie anhand der Fig. 3 zudem zu erkennen ist, können die parallel geschalteten, vorzugsweise jeweils vertikalen Flüssigkeitskanäle 34 eines jeweiligen Einbaus 14 sowohl im oberen Bereich als auch im unteren Bereich jeweils miteinander verbunden sein, sodass sie parallel von der Flüssigkeit durchströmt werden. Bei einem solchen mehrere parallel geschaltete, horizontal nebeneinander angeordnete Flüssigkeitskanäle 34 umfassenden Einbau 14 kann der Flüssigkeitseinlass 60 insbesondere im oberen Bereich des ersten Flüssigkeitskanals 34 und der Flüssigkeitsauslass 58 insbesondere im unteren Bereich des letzten Flüssigkeitskanals 34 vorgesehen sein.

Zur Verbindung der parallel geschalteten, horizontal nebeneinander angeordneten Flüssigkeitskanäle 34 eines jeweiligen Einbaus 14 können beispielsweise die Flachmembranen 36' im unteren bzw. oberen Bereich mit entsprechenden Bohrungen versehen sein.

Die jeweils zumindest teilweise membranbegrenzten Flüssigkeitskanäle 34 können insbesondere durch parallel geschaltete Rahmenelemente aufgebaut sein, womit ein stapelartiger Einbau 14 erhalten wird. Es können mehrere solche Stapel bzw. Einbauten 14 vertikal übereinander angeordnet sein. Dabei kann zwischen vertikal benachbarten Stapeln insbesondere jeweils wieder ein Rücklaufkanal 40 nach Art eines U-Rohres vorgesehen sein (vgl. Fig. 2).

Fig. 4 zeigt in schematischer Darstellung einen beispielhaften Einbau 14 der Rektifizierkolonne 16, die zumindest einen Flüssigkeitskanal 34 mit einer Spiralmembranwickelkonfiguration 70 umfasst, die z.B. auf wenigstens zwei einander gegenüberliegenden Seiten durch die dampfdurchlässige, flüssigkeitsdichte Membranwand 36 begrenzt ist. In der Fig. 4 ist eine beispielhafte Ausführung einer solchen Spiralmembranwickelkonfiguration 70 in Draufsicht dargestellt. Die Spirale kann insbesondere als Doppelspirale ausgeführt sein, wobei die Membran auf zumindest zwei einander gegenüberliegenden Seiten den Flüssigkeitskanal 34 begrenzt. An den beiden stirnseitigen Enden kann der Membrankanal geschlossen sein. Die Rücklaufflüssigkeit 28 (vgl. auch Fig. 1) strömt in diesem Fall der Spiralmembranwickelkonfiguration 70 oben zu, während sie im unteren Bereich der Spiralmembranwickelkonfiguration 70 austritt. Der Flüssigkeitseinlass 60 kann also beim vorliegenden Ausführungsbeispiel im Bereich des oberen Endes der Spiralmembranwickelkonfiguration 70 vorgesehen sein, während der Flüssigkeitsauslass 58 im Bereich des unteren Endes der Spiralmembranwickelkonfiguration 70 vorgesehen sein kann.

Es können mehrere solche jeweils mit einer Spiralmembranwickelkonfiguration versehene Einbauten 14 vertikal übereinander angeordnet sein, wobei vertikal benachbarte Einbauten 14 insbesondere wieder über einen Rücklaufkanal 40 nach Art eines U-Rohres (vgl. Fig. 2), miteinander verbunden sein können.

Die Rektifizierkolonne 16 kann beispielsweise auch wenigstens einen Einbau 14 mit zumindest einem sich vorzugsweise allgemein vertikal erstreckenden Flüssigkeitskanal 34 in Form eines Membranhohlfadens 72 umfassen (vgl. Fig. 5).

Fig. 5 zeigt in schematischer Darstellung einen beispielhaften Einbau 14 der Rektifizierkolonne 16 mit mehreren parallel geschalteten, sich vorzugsweise jeweils allgemein vertikal erstreckenden Flüssigkeitskanälen 34 in Form solcher Membranhohlfäden 72, deren dampfdurchlässige, flüssigkeitsdichte Membranwand 36 jeweils mit aus den Kolonnensumpf 26 in den Dampfraum 28 der Rektifizierkolonne 16 aufsteigendem Dampf in Kontakt kommt (vgl. auch Fig. 1).

Wie anhand der Fig. 5 zu erkennen ist, kann ein jeweiliger Einbau 14 insbesondere mehrere parallel geschaltete, horizontal in einer x-Richtung und einer dazu senkrechten y-Richtung verteilte Membranhohlfäden 72 umfassen, denen die Flüssigkeit über in deren oberem Bereich vorgesehene x- und y-Richtungsverteiler 74 bzw. 76 zugeführt und aus denen die Flüssigkeit über in deren unterem Bereich vorgesehene x- und y-Richtungssammler 78 bzw. 80 abgeführt wird.

Es können auch wieder mehrere solche jeweils mehrere parallel geschaltete Membranhohlfäden 72 umfassende Einbauten 14 vertikal übereinander angeordnet sein, wobei vertikal benachbarte Einbauten insbesondere jeweils wieder über einen Rücklaufkanal 40 nach Art eines U-Rohres miteinander verbunden sein können (vgl. Fig. 2).

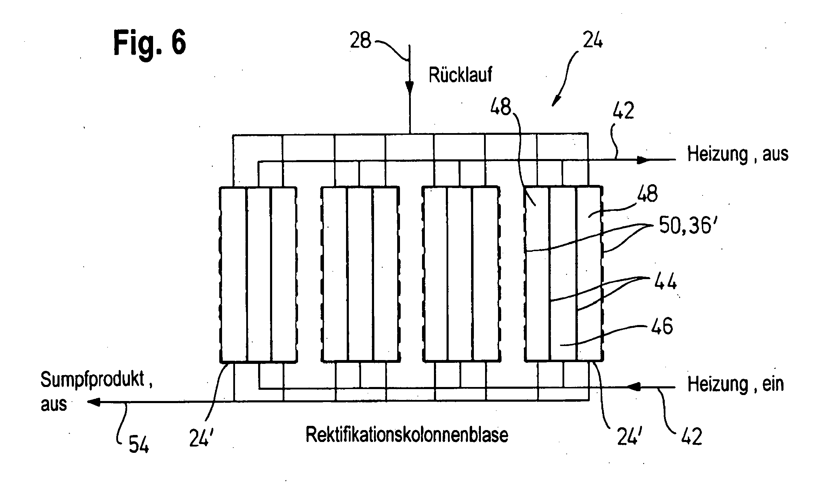

Der dem Kolonnensumpf 26 zugeordnete Verdampfer 24 kann vorteilhafterweise auch wenigstens eine Verdampfungseinheit 24' umfassen, die auf wenigstens zwei einander gegenüberliegenden Seiten des Heizmittelkanals 46 jeweils einen von diesem durch eine wärmeleitende, dampf- und flüssigkeitsdichte Wand 44 getrennten, von Flüssigkeit aus der Rektifizierkolonne 16 bzw. deren Einbauten 14 beaufschlagten Flüssigkeitskanal 48 umfasst, der auf seiner der wärmeleitenden Wand 44 gegenüberliegenden Seite durch eine dampfdurchlässige, flüssigkeitsdichte Membranwand 50 vom Dampfraum 52 des Kolonnensumpfes 26 getrennt ist (vgl. Fig. 6).

Fig. 6 zeigt in schematischer Darstellung eine beispielhafte Ausführungsform eines solchen dem Kolonnensumpf 26 (vgl. auch Fig. 1) zugeordneten Verdampfers 24 mit mehreren bezüglich der zugeführten Flüssigkeit aus der Rektifizierkolonne 16 bzw. deren Einbauten 14 parallel geschalteten Verdampfungseinheiten 24'.

Bei dem in der Fig. 6 dargestellten Ausführungsbeispiel sind die sich vorzugsweise jeweils allgemein vertikal erstreckenden Verdampfungseinheiten 24' horizontal nebeneinander angeordnet, wobei ein jeweiliges Paar von horizontal benachbarten Verdampfungseinheiten 24' vorzugsweise einander zugewandte Flachmembranen 36' aufweist, durch die angrenzende Flüssigkeitskanäle 48 dieser benachbarten Verdampfungseinheiten 24' vom Dampfraum 52 des Kolonnensumpfes 26 getrennt sind.

Die Rektifikationsanlage 10 kann zumindest teilweise als modulares Strömungssystem mit einer Vielzahl von Rahmenelementen aufgebaut werden, wobei verschiedene Funktionseinheiten wie insbesondere ein jeweiliger Flüssigkeitskanal 34 der Einbauten 14 der Rektifizierkolonne 16 sowie ein jeweiliger Heizmittelkanal 46 und ein jeweiliger Flüssigkeitskanal 48 der Verdampfungseinheiten 24' des dem Kolonnensumpf 26 zugeordneten Verdampfers 24 jeweils in Form eines solchen Rahmenelements vorgesehen sein können. Die Rahmenelemente können mit Stegstrukturen versehen sein, über die sie beispielsweise zur Bildung eines mehrere parallel geschaltete Flüssigkeitskanäle 34 umfassenden Kolonneneinbaus 14 (vgl. beispielsweise Fig. 3) oder der Verdampfungseinheiten 24' (vgl. beispielsweise die Fig. 1 und 6) miteinander verbindbar sind. Die Rahmenelemente können zumindest teilweise jeweils einen von einem äußeren Rahmen umschlossenen Innenbereich umfassen, der vorzugsweise mit einem insbesondere gitterartigen Abstandshalter versehen sein kann, der auf wenigstens einer Seite zur Bildung eines jeweiligen Kanals insbesondere jeweils mit einer Funktionsfläche versehen sein kann, die vorteilhafterweise jeweils durch eine Folie oder eine Membran, insbesondere Flachmembran 36', gebildet ist.

**Bezugszeichenliste**

10   Rektifikationsanlage
12   Flüssigkeitsgemisch
14   Einbau der Rektifizierkolonne
16   Rektifizierkolonne
18   Flüssigkeitsgemischzulauf
20   Abtriebssäule
22   Verstärkungssäule
24   Verdampfer
24'   Verdampfungseinheit
26   Kolonnensumpf

28   Rücklaufflüssigkeit
30   Kolonnenkopf
32   Kondensator
34   Flüssigkeitskanal
36   dampfdurchlässige, flüssigkeitsdichte Membranwand
36'   Flachmembran
38   Dampfraum der Rektifizierkolonne 16
40   Rücklaufkanal
42   Heizmittel
44   wärmleitende, dampf- und flüssigkeitsdichte Wand
46   Heizmittelkanal
48   Flüssigkeitskanal
50   dampfdurchlässige, flüssigkeitsdichte Membranwand
52   Dampfraum des Kolonnensumpfes
54   Sumpfprodukt
56   Strömungsrichtung der Flüssigkeit
58   Flüssigkeitsauslass
60   Flüssigkeitseinlass
62   Ablaufteil
64   Kanalabschnitt
66   weitere dampfdurchlässige, flüssigkeitsdichte Membranwand
68   Dampfkanal
70   Spiralmembranwickelkonfiguration
72   Membranhohlfaden
74   x-Richtungsverteiler
76   y-Richtungsverteiler
78   x-Richtungssammler
80   y-Richtungssammler

LS   Leichtersiedendes
SS   Schwerersiedendes

**Patentansprüche**

1.  Rektifikationsanlage (10) zur Trennung von Komponenten eines Flüssigkeitsgemisches (12), mit einer vertikalen, durch Einbauten (14) in einzelne Trennstufen unterteilten Rektifizierkolonne (16), die durch den Flüssigkeitsgemischzulauf (18) zudem in eine Abtriebssäule (20) und eine Verstärkungssäule (22) geteilt wird, wobei in der Abtriebssäule (20) das Leichtersiedende vom aus einem einen Verdampfer (24) umfassenden Kolonnensumpf (26) aufsteigenden Dampf aus dem Flüssigkeitsgemisch (12) abgetrieben und in der Verstärkungssäule (22) der Dampf mit Leichtersiedendem angereichert wird, das einer Rücklaufflüssigkeit (28) entzogen wird, die dadurch erzeugt wird, dass am Kolonnenkopf (30) abgezogener Dampf zumindest teilweise in einem Kondensator (32) niedergeschlagen und in die Rektifizierkolonne (16) zurückgeführt wird, und die Rücklaufflüssigkeit (28) sowie das vorzugsweise zwischen zwei Trennstufen zugeführte Flüssigkeitsgemisch (12) in den vertikal aufeinanderfolgenden, miteinander verbundenen Einbauten (14) geführt sind, wobei die Einbauten (14) jeweils wenigstens einen Flüssigkeitskanal (34) umfassen, der zumindest teilweise durch eine beidseitig dampfdurchlässige, flüssigkeitsdichte Membranwand (36) vom Dampfraum (38) der Rektifizierkolonne (16) getrennt ist,
**dadurch gekennzeichnet,**
**dass** vertikal benachbarte Einbauten (14) jeweils über einen Rücklaufkanal (40) miteinander verbunden sind, der zwischen einem in einem unteren Bereich eines Flüssigkeitskanals (34) des in Strömungsrichtung (56) der Flüssigkeit betrachtet vorangehenden Einbaus vorgesehenen Flüssigkeitsauslass (58) und einem in einem oberen Bereich eines Flüssigkeitskanals des darauffolgenden Einbaus vorgesehenen Flüssigkeitseinlass (60) angeordnet und ausgehend vom Flüssigkeitsauslass (58) des vorangehenden Einbaus zunächst zumindest bis zum obersten möglichen Flüssigkeitsniveau in diesem Einbau nach oben geführt ist, so dass die Flüssigkeitskanäle (34) der Einbauten (14) jeweils vollständig mit Flüssigkeit gefüllt sind,
**dass** der Rücklaufkanal (40) nach Art eines U-Rohres ausgeführt ist, und
**dass** der obere Bereich des Ablaufteils (62) des nach Art eines U-Rohres ausgeführten Rücklaufkanals (40) einen Kanalabschnitt (64) umfasst, der zumindest teilweise von einer weiteren vorzugsweise wieder beidseitig dampfdurchlässigen, flüssigkeitsdichten Membranwand (66) begrenzt ist, die einerseits mit der Flüssigkeit und andererseits mit dem Dampfraum (38) der Rektifizierkolonne (16) in Kontakt kommt.

2. Rektifikationsanlage (10) nach Anspruch 1,
**dadurch gekennzeichnet,**
**dass** die Rektifikationsanlage (10) derart ausgebildet ist, dass der Absolutdruck im Dampfraum (38) der Rektifizierkolonne (16) zur Erhöhung des Dampfdurchtritts durch die Membranwände (36) der Flüssigkeitskanäle (34) der Einbauten (14) entsprechend abgesenkt ist.

3. Rektifikationsanlage (10) nach einem der vorhergehenden Ansprüche,
**dadurch gekennzeichnet,**
**dass** wenigstens ein Einbau (14) zumindest einen sich vorzugsweise allgemein vertikal ersteckenden Flüssigkeitskanal (34) mit wenigstens einer Flachmembran (36') umfasst.

4. Rektifikationsanlage (10) nach einem der vorhergehenden Ansprüche,
**dadurch gekennzeichnet,**
**dass** wenigstens ein Einbau (14) zumindest einen Flüssigkeitskanal (34) mit einer Spiralmembranwickelkonfiguration (70) umfasst, die auf wenigstens zwei einander gegenüberliegenden Seiten durch die dampfdurchlässige, flüssigkeitsdichte Membranwand (36) begrenzt ist.

5. Rektifikationsanlage (10) nach einem der vorhergehenden Ansprüche,
**dadurch gekennzeichnet,**
**dass** wenigstens ein Einbau (14) zumindest einen sich vorzugsweise allgemein vertikal ersteckenden Flüssigkeitskanal (34) in Form eines Membranhohlfadens (72) umfasst.

6. Rektifikationsanlage (10) nach einem der vorhergehenden Ansprüche,
**dadurch gekennzeichnet,**
**dass** wenigstens ein Einbau (14) mehrere parallel geschaltete, sich vorzugsweise jeweils allgemein vertikal erstreckende Flüssigkeitskanäle (34) umfasst.

7. Rektifikationsanlage (10) nach Anspruch 6,
**dadurch gekennzeichnet,**
**dass** die parallel geschalteten Flüssigkeitskanäle (34) horizontal nebeneinander angeordnet sind.

8. Rektifikationsanlage (10) nach Anspruch 7,
**dadurch gekennzeichnet,**
**dass** wenigstens ein Einbau (14) vorgesehen ist, der mehrere parallel geschaltete, horizontal nebeneinander angeordnete Flüssigkeitskanäle (34) umfasst, die jeweils auf wenigstens zwei einander gegenüberliegenden Seiten durch eine Flachmembran (36') vom Dampfraum (38) der Rektifizierkolonne (16) getrennt sind, wobei ein jeweiliges Paar von horizontal benachbarten Flüssigkeitskanälen (34) vorzugsweise einander zugewandte Flachmembranen (36') aufweist, die seitlich einen Dampfkanal (68) begrenzen, durch den aus dem Kolonnensumpf (26) in den Dampfraum (38) der Rektifizierkolonne (16)aufsteigender Dampf hindurchströmt.

9. Rektifikationsanlage (10) nach Anspruch 7 oder 8,
**dadurch gekennzeichnet,**
**dass** wenigstens ein Einbau (14) vorgesehen ist, der mehrere parallel geschaltete, horizontal nebeneinander angeordnete Flüssigkeitskanäle in Form von Membranhohlfäden (72) umfasst, deren dampfdurchlässige, flüssigkeitsdichte Membranwand (36) jeweils mit aus dem Kolonnensumpf (26) in den Dampfraum (38) der Rektifizierkolonne (16) aufsteigendem Dampf in Kontakt kommt.

10. Rektifikationsanlage nach Anspruch 9,
**dadurch gekennzeichnet,**
**dass** mehrere parallel geschaltete, horizontal in einer x-Richtung und einer dazu senkrechten y-Richtung verteilte Membranhohlfäden (72) vorgesehen sind, denen die Flüssigkeit über in deren oberem Bereich vorgesehene x-und y-Richtungsverteiler (74 bzw. 76) zugeführt und aus denen die Flüssigkeit über in deren unterem Bereich vorgesehene x-und y-Richtungssammler (78 bzw. 80) abgeführt wird.

11. Rektifikationsanlage (10) nach einem der vorhergehenden Ansprüche,
**dadurch gekennzeichnet,**
**dass** der dem Kolonnensumpf (26) zugeordnete Verdampfer (24) wenigstens eine Verdampfungseinheit (24') mit einem von einem Heizmittel (42) durchströmten, zumindest teilweise von einer wärmeleitenden, dampf- und flüssigkeitsdichten Wand (44) begrenzten Heizmittelkanal (46) und wenigstens einem an die wärmeleitende Wand (44) angrenzenden, von Flüssigkeit aus der Rektifizierkolonne (16) beaufschlagten Flüssigkeitskanal (48) umfasst, der auf seiner der der wärmeleitenden Wand (44) gegenüberliegenden Seite durch eine dampfdurchlässige, flüssigkeitsdichte Membranwand (50) vom Dampfraum (52) des Kolonnensumpfes (26) getrennt und dem das Sumpfprodukt (54) entnehmbar ist.

12. Rektifikationsanlage (10) nach Anspruch 11,
**dadurch gekennzeichnet,**
**dass** wenigstens eine Verdampfungseinheit (24') vorgesehen ist, die auf wenigstens zwei einander gegenüberliegenden Seiten des Heizmittelkanals (46) jeweils einen von diesem durch eine wärmeleitende, dampf- und flüssigkeitsdichte Wand (44) getrennten, von Flüssigkeit aus der Rektifizierkolonne (16) beaufschlagten Flüssigkeitskanal (48) umfasst, der auf seiner der wärmeleitenden Wand (44) gegenüberliegenden Seite durch eine dampfdurchlässige, flüssigkeitsdichte Membranwand (50) vom Dampfraum (52) des Kolonnensumpfes (26) getrennt ist.

13. Rektifikationsanlage (10) nach Anspruch 11 oder 12,
**dadurch gekennzeichnet,**
**dass** der Verdampfer (24) mehrere bezüglich der zugeführten Flüssigkeit aus der Rektifizierkolonne parallel geschaltete Verdampfungseinheiten (24') umfasst.

14. Rektifikationsanlage (10) nach Anspruch 13,
**dadurch gekennzeichnet,**
**dass** die sich vorzugsweise jeweils allgemein vertikal erstreckenden Verdampfungseinheiten (24') horizontal nebeneinander angeordnet sind, wobei ein jeweiliges Paar von horizontal benachbarten Verdampfungseinheiten (24') vorzugsweise einander zugewandte Flachmembranen (36') aufweist, durch die angrenzende Flüssigkeitskanäle (48) dieser benachbarten Verdampfungseinheiten (24') vom Dampfraum (52) des Kolonnensumpfes (26) getrennt sind.

**Claims**

1. A distillation plant (10) for separating components of a liquid mixture (12) comprising a vertical rectifier column (16) which is divided by installations (14) into individual separation stages and which is moreover divided by the liquid mixture inflow (18) into a stripper column (20) and an enrichment column (22), wherein the lower boiling fraction is stripped in the stripper column (20) from the vapor from the liquid mixture (12) rising from a tower sump (26) comprising an evaporator (24) and wherein the vapor is enriched in the enrichment column (22) with the lower boiling fraction which is extracted from a return liquid (28) which is generated in that vapor removed at the tower head (30) is precipitated at least in part in a condenser (32) and is conducted back into the rectifier column (16) and wherein the return liquid (28) as well as the liquid mixture (12) preferably supplied between two separation stages are conducted in the installations (14) following one another vertically and connected to one another, wherein the installations (14) each comprise at least one liquid passage (34) which is separated from the vapor space (38) of the rectifier column (16) at least in part by a membrane wall (36) which is vapor permeable and liquid tight at both sides, **characterized in that**
vertically adjacent installations (14) are each connected to one another via a return passage (40) which is arranged between a liquid outlet (58) provided in a lower region of a liquid passage (34) of the upstream installation viewed in the flow direction (56) of the liquid and a liquid inlet (60) provided in an upper region of a liquid passage of the downstream installation and is conducted upwardly starting from the liquid outlet (58) of the upstream installation initially at least up to the uppermost possible liquid level in this installation such that the liquid passages (34) of the installations (14) are each completely filled with liquid;
**in that** the return passage (40) is configured in the manner of a U pipe; and
**in that** the upper region of the outflow part (62) of the return passage (40) configured in the manner of a U pipe comprises a passage section (64) which is bounded at least in part by a further membrane wall (66) which is preferably again vapor permeable and liquid tight at both sides and which comes into contact with the liquid, on the one hand, and with the vapor space (38) of the rectifier column (16), on the other hand.

2. A distillation plant (10) in accordance with claim 1, **characterized in that**
the distillation plant (10) is configured such that the absolute pressure in the vapor space (38) of the rectifier column (16) is correspondingly lowered for increasing the passage of vapor through the membrane walls (36) of the liquid passages (34) of the installations (14).

3. A distillation plant (10) in accordance with one of the preceding claims,
**characterized in that**
at least one installation (14) comprises at least one preferably generally vertically extending liquid passage (34) having at least one flat membrane (36').

4. A distillation plant (10) in accordance with any one of the preceding claims,
**characterized in that**
at least one installation (14) comprises at least one liquid passage (34) having a spiral membrane winding configuration (70) which is bounded by the vapor permeable, liquid tight membrane wall (36) at at least two mutually opposite sides.

5. A distillation plant (10) in accordance with any one of the preceding claims,
**characterized in that**
at least one installation (14) comprises at least one preferably generally vertically extending liquid passage (34) in the form of a hollow membrane thread (72).

6. A distillation plant (10) in accordance with any one of the preceding claims,
**characterized in that**
at least one installation (14) comprises a plurality of liquid passages (34) connected in parallel and preferably each generally extending vertically.

7. A distillation plant (10) in accordance with claim 6,
**characterized in that**
the liquid passages (34) connected in parallel are arranged horizontally next to one another.

8. A distillation plant (10) in accordance with claim 7,
**characterized in that**
at least one installation (14) is provided which comprises a plurality of liquid passages (34) which are connected in parallel, which are arranged horizontally next to one another and which are respectively separated from the vapor space (38) of the rectifier column (16) at at least two mutually oppositely disposed sides by a flat membrane (36'), with a respective pair of horizontally adjacent liquid passages (34) having preferably mutually facing flat membranes (36') which laterally bound a vapor passage (68) through which vapor rising from the tower sump (26) flows into and through the vapor space (38) of the rectifier column (16).

9. A distillation plant (10) in accordance with claim 7 or claim 8,
**characterized in that**
at least one installation (14) is provided which comprises a plurality of liquid passages connected in parallel and arranged horizontally next to one another in the form of hollow membrane threads (72) whose vapor permeable, liquid tight membrane wall (36) respectively comes into contact with vapor rising from the tower sump (26) into the vapor space (38) of the rectifier column (16).

10. A distillation plant (10) in accordance with claim 9,
**characterized in that**
a plurality of hollow membrane threads (72) are provided which are connected in parallel, which are distributed horizontally in an x direction and in a y direction perpendicular thereto, to which the liquid is supplied via x and y direction distributors (74 and 76 respectively) provided in their upper region and from which the liquid is led off via x and y direction collectors (78 and 80 respectively) provided in their lower region.

11. A distillation plant (10) in accordance with any one of the preceding claims,
**characterized in that**
the evaporator (24) associated with the tower sump (26) comprises at least one evaporation unit (24') having a heating medium passage (46) which is flowed through by a heating medium (42) and which is bounded at least in part by a heat conductive, vapor tight and liquid tight wall (44) and having at least one liquid passage (48) which is adjacent to the heat conductive wall (44), which is acted on by liquid from the rectifier column (16), which is separated from the vapor space (52) of the tower sump (26) at its side disposed opposite the heat conductive wall (44) by a vapor permeable, liquid tight membrane wall (50) and from which the sump product (54) can be removed.

12. A distillation plant (10) in accordance with claim 11,
**characterized in that**
at least one evaporation unit (24') is provided which comprises, at at least two mutually oppositely disposed sides of the heating medium passage (46), a respective liquid passage (48) which is separated therefrom by a heat conductive, vapor tight and liquid tight wall (44), which is acted on by liquid from the rectifier column (16) and which is separated from the vapor space (52) of the tower sump (26) at its side disposed opposite the heat conductive wall (44) by a vapor permeable, liquid tight membrane wall (50).

13. A distillation plant (10) in accordance with claim 11 or claim 12,
**characterized in that**
the evaporator (24) comprises a plurality of evaporation units (24') connected in parallel with respect to the supplied liquid from the rectifier column.

**14.** A distillation plant (10) in accordance with claim 13, **characterized in that** the preferably respectively generally vertically extending evaporation units (24') are arranged horizontally next to one another, with a respective pair of horizontally adjacent evaporation units (24') having preferably mutually facing flat membranes (36') by which adjacent liquid passages (48) of these adjacent evaporation units (24') are separated from the vapor space (52) of the tower sump (26).

**Revendications**

**1.** Installation de rectification (10) pour la séparation de composantes d'un mélange de liquides (12) comprenant une colonne rectifieuse verticale (16) subdivisée en étages de séparation individuels par des inserts (14), ladite colonne étant en outre divisée en une colonne d'épuisement (20) et une colonne d'enrichissement (22), dans laquelle, dans la colonne d'épuisement (20), la fraction la plus volatile de la vapeur qui s'élève depuis un fond de colonne (26) incluant un évaporateur (24) est séparée hors du mélange de liquides (12) et dans la colonne d'enrichissement (22) la vapeur est enrichie avec la fraction la plus volatile qui est soutirée d'un liquide de recyclage (28), lequel est engendré par le fait que la vapeur soustraite à la tête (30) de la colonne est précipitée au moins partiellement dans un condenseur (32) et est ramenée à la colonne rectifieuse (16), et le liquide de recyclage (28) ainsi que le mélange de liquides (12) admis de préférence entre deux étages de séparation sont passés dans les inserts (14) qui se suivent mutuellement verticalement et qui sont reliés les uns avec les autres, dans laquelle les inserts (14) incluent respectivement au moins un canal à liquide (34) qui est séparé au moins partiellement vis-à-vis de la chambre à vapeur (38) de la colonne rectifieuse (16) par une paroi à membrane (36) perméable à la vapeur et étanche aux liquides sur les deux côtés, **caractérisée en ce que** des inserts verticalement voisins (14) sont reliés les uns aux autres respectivement via un canal de retour (40) qui est agencé entre une sortie de liquide (58) prévue dans une région inférieure d'un canal à liquide (34) de l'insert précédent considéré en direction d'écoulement (56) du liquide, et une entrée de liquide (60) prévue dans une région supérieure d'un canal à liquide de l'insert successif, et est menée vers le haut en partant de la sortie de liquide (58) de l'insert précédent tout d'abord au moins jusqu'au plus haut niveau possible du liquide dans cet insert, de sorte que les canaux à liquide (36) des inserts (14) sont respectivement entièrement remplis de liquide, **en ce que** le canal de retour (40) est réalisé à la manière d'un tube en U, et

**en ce que** la région supérieure de la partie de sortie (62) du canal de retour (40) réalisé à la manière d'un tube en U inclut un tronçon de canal (64) qui est au moins partiellement délimité par une autre paroi à membrane (66) de préférence également perméable à la vapeur et étanche aux liquides sur les deux côtés, ladite paroi à membrane venant en contact d'une part avec le liquide et d'autre part avec la chambre à vapeur (38) de la colonne de rectification (16).

**2.** Installation de rectification (10) selon la revendication 1, **caractérisée en ce que** l'installation de rectification (10) est réalisée de telle manière que la pression absolue dans la chambre à vapeur (38) de la colonne rectifieuse (16) est réduite en correspondance pour augmenter la traversée de vapeur à travers les parois à membrane (36) des canaux à liquide (34) des inserts (14).

**3.** Installation de rectification (10) selon l'une des revendications précédentes, **caractérisée en ce qu'**au moins un insert (14) inclut au moins un canal à liquide (34) s'étendant de préférence généralement verticalement, avec au moins une membrane plane (36').

**4.** Installation de rectification (10) selon l'une des revendications précédentes, **caractérisée en ce qu'**au moins un insert (14) inclut au moins un canal à liquide (34) avec une configuration (70) en bobine de membrane spiralée, qui est délimitée sur au moins deux côtés mutuellement opposés par la paroi à membrane perméable à la vapeur et étanche aux liquides (36).

**5.** Installation de rectification (10) selon l'une des revendications précédentes, **caractérisée en ce qu'**au moins un insert (14) inclut au moins un canal à liquide (34) s'étendant de préférence généralement verticalement, sous la forme d'un fil creux à membrane (72).

**6.** Installation de rectification (10) selon l'une des revendications précédentes, **caractérisée en ce qu'**au moins un insert (14) inclut plusieurs canaux à liquide (34) branchés en parallèle et s'étendant de préférence chacun généralement verticalement.

**7.** Installation de rectification (10) selon la revendication 6, **caractérisée en ce que** les canaux à liquide (34) branchés en parallèle sont agencés horizontalement les uns à côté des autres.

**8.** Installation de rectification (10) selon la revendication 7, **caractérisée en ce qu'**il est prévu au moins un insert (14) qui inclut plusieurs canaux à liquide (34) branchés en parallèle et agencés horizontalement les uns à côté des autres, qui sont respectivement séparés sur au moins deux côtés mutuellement opposés par une membrane plane (36') vis-à-vis de la chambre à vapeur (38) de la colonne rectifieuse (16), dans laquelle une paire respective de canaux à liquide horizontalement voisins (34) comprend de préférence des membranes planes (36') tournées l'une vers l'autre, qui délimitent latéralement un canal à vapeur (68) à travers lequel s'écoule la vapeur qui monte depuis le fond de colonne (26) jusque dans la chambre à vapeur (38) de la colonne rectifieuse (16).

9. Installation de rectification (10) selon la revendication 7 ou 8, **caractérisée en ce qu'**il est prévu au moins un insert (14) qui inclut plusieurs canaux à liquide, branchés parallèlement et agencés horizontalement les uns à côté des autres, sous la forme de fils creux à membrane (72), dont la paroi de membrane perméable à la vapeur et étanche aux liquides (36) vient respectivement en contact avec la vapeur qui monte depuis le fond de colonne (26) jusque dans la chambre à vapeur (38) de la colonne rectifieuse (16).

10. Installation de rectification selon la revendication 9, **caractérisée en ce qu'**il est prévu plusieurs fils creux à membrane (72) branchés en parallèle et répartis horizontalement dans une direction x et dans une direction y perpendiculaire à celle-ci, auxquels le liquide est amené via un répartiteur en direction x et en direction y (74, ou 76) prévu dans leur région supérieure, et depuis lesquels le liquide est évacué via un collecteur en direction x et en direction y (78, ou 80) prévu dans leur région inférieure.

11. Installation de rectification (10) selon l'une des revendications précédentes, **caractérisée en ce que** l'évaporateur (24) associé au fond de colonne (26) inclut au moins une unité d'évaporation (24') avec un canal d'agent de chauffage (46) traversé par un agent de chauffage (42) et au moins partiellement délimité par une paroi thermoconductrice (44) étanche à la vapeur et étanche aux liquides, et au moins un canal à liquide (48) adjacent à la paroi thermoconductrice (44) est alimenté par le liquide provenant de la colonne rectifieuse (16), qui est séparé de la chambre à vapeur (52) du fond de colonne (26) sur son côté opposé à la paroi thermoconductrice (44) par une paroi à membrane (50) perméable à la vapeur et étanche aux liquides, et hors duquel le produit du fond (54) peut être soutiré.

12. Installation de rectification (10) selon la revendication 11, **caractérisée en ce qu'**il est prévu au moins une unité d'évaporation (24') qui inclut, sur au moins deux côtés mutuellement opposés du canal d'agent de chauffage (46), respectivement un canal à liquide (48) séparé du canal d'agent de chauffage par une paroi thermoconductrice (44) étanche à la vapeur et étanche aux liquides, alimenté par le liquide provenant de la colonne rectifieuse (16), ledit canal à liquide étant séparé, sur son côté opposé à la paroi thermoconductrice (44), par une paroi à membrane (50) perméable à la vapeur et étanche aux liquides, vis-à-vis de la chambre à vapeur (52) du fond de colonne (26).

13. Installation de rectification (10) selon la revendication 11 ou 12, **caractérisée en ce que** l'évaporateur (24) inclut plusieurs unités d'évaporation (24') branchées en parallèle par référence au liquide amené provenant de la colonne rectifieuse.

14. Installation de rectification (10) selon la revendication 13, **caractérisée en ce que** les unités d'évaporation (24') qui s'étendent de préférence respectivement généralement verticalement sont agencées horizontalement les unes à côté des autres, de sorte qu'une paire respective d'unités d'évaporation (24') horizontalement voisines comprend de préférence des membranes planes (36') tournées l'une vers l'autre, et au moyen desquelles les canaux à liquide (48) de ces unités d'évaporation voisines (24') sont séparés vis-à-vis de la chambre à vapeur (52) du fond de colonne (26).

# Fig. 1

# Fig. 2

Rücklauf, ein

60

64

66

40

**34**

62

56

58

Rücklauf, aus

# Fig. 3

14

60

36'

36'

34

34

68

58

EP 2 755 732 B1

# Fig. 4

34

14

36

Rücklauf aus,
unten

Rücklauf zu ,
oben

58

60

70

# Fig. 5

14

74
Verteiler
x – Richtung

76

Verteiler
y – Richtung

36

72

34

80

78

Sammler
y - Richtung

Sammler
x - Richtung

EP 2 755 732 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040211725 A1
- US 20060213757 A1
- DE 102005053874 A1